# EUROPEAN PATENT APPLICATION

(11) **EP 4 194 095 A1**
(43) Date of publication of application: **14.06.2023**
(21) Application number: 21213076.9
(22) Date of filing: 08.12.2021
(51) Int. Cl.: B04B 13/00, B04B 1/08

(54) **A CENTRIFUGAL SEPARATOR AND AN INTERFACE LEVEL SENSOR**

(71) Applicant: Alfa Laval Corporate AB, 221 00 Lund (SE)
(72) Inventor: BORGSTRÖM, Leonard, SE-135 42 TYRESÖ (SE); TÖRNBLOM, Olle, SE-624 62 FÅRÖSUND (SE)
(74) Representative: Alfa Laval Attorneys

(57) **Abstract**

The present invention provides a centrifugal separator (1) for separating at least one liquid phase from a liquid feed mixture, comprising a frame (2), a drive member (5) and a rotatable part (8), wherein the drive member (5) is configured to rotate the rotatable part (8) in relation to the frame (2) around an axis of rotation (X), and wherein the rotatable part (8) comprises a centrifuge bowl (10) enclosing a separation space (13). The separation space (13) comprises surface enlarging inserts (15) for increasing the separation performance of the centrifugal separator (1). The centrifugal separator (1) further comprises an interface level sensor (30) for detecting at least one interface between separated phases in the centrifuge bowl (10) during operation of the centrifugal separator (1); and transmission means (42) configured for wireless transmission of information of said at least one interface to a receiver (51) outside of the centrifuge bowl (10). The centrifugal separator (1) further comprises a solid transmission window (33) arranged in the wall of the centrifuge bowl (10); said solid transmission window (33) having a higher transmission capacity for the wireless communication signal than the material of the centrifuge bowl (10).

## Description

### Field of the Invention

The present invention relates to the field of centrifugal separators, and more precisely to a centrifugal separator comprising an interface level sensor.

### Background of the Invention

Centrifugal separators are generally used for separation of liquids and/or for separation of solids from a liquid feed mixture. During operation, liquid mixture to be separated is introduced into a rotating bowl and heavy particles or denser liquid, usually water, accumulates at the periphery of the rotating bowl whereas less dense liquid accumulates closer to the central axis of rotation. This allows for collection of the separated fractions, e.g. by means of different outlets arranged at different radius from the rotational axis.

When separating two immiscible liquids in a centrifugal separator an interface between the two liquids is formed inside the separator bowl. The separation quality is known to depend strongly on the location of this interface. The interface location can be controlled by changing the outlet liquid levels. The interface location is also affected by the density and viscosity of the liquids and the centrifugal separator throughput.

Traditionally the interface position is passively controlled by the choice of gravity disc and level ring. In processes where the conditions (temperature, density, flow rate etc.) are varying this passive control may fail.

US3189268 describes a centrifugal separator having measuring capacitor elements/rods/wires inside the centrifuge bowl to determine the interface position. The rods/wires are connected to a ring-shaped transmission capacitor.

WO2021032353 discloses a centrifugal separator with two pressure sensors and a control unit is configured to determine a parameter of the process liquid within the separation space during operation of the centrifugal separator based on measurements from the first and second pressure sensors.

However, there is a need in the art for improved interface level sensors and for improved communication between sensors within the centrifuge bowl and the outside of the bowl during operation of the centrifugal separator.

### Summary of the Invention

It is an object of the invention to at least partly overcome one or more limitations of the prior art. In particular, it is an object to provide a centrifugal separator comprising an improved type of interface level sensor.

As a first aspect of the invention, there is provided a centrifugal separator for separating at least one liquid phase from a liquid feed mixture, comprising
a frame, a drive member and a rotatable part,
wherein the drive member is configured to rotate the rotatable part in relation to the frame around an axis of rotation (X), and
wherein the rotatable part comprises a centrifuge bowl enclosing a separation space;
wherein the separation space comprises surface enlarging inserts for increasing the separation performance of the centrifugal separator;
and wherein the centrifugal separator further comprises
an interface level sensor for detecting at least one interface between separated phases in the centrifuge bowl during operation of the centrifugal separator; and
transmission means configured for wireless transmission of information of said at least one interface to a receiver outside of the centrifuge bowl;
and wherein the centrifugal separator comprises a solid transmission window arranged in the wall of the centrifuge bow; said solid transmission window having a higher transmission capacity for the wireless communication signal than the material of the centrifuge bowl.

As used herein, the term "axially" denotes a direction which is parallel to the rotational axis (X). Accordingly, relative terms such as "above", "upper", "top", "below", "lower", and "bottom" refer to relative positions along the rotational axis (X). Correspondingly, the term "radially" denotes a direction extending radially from the rotational axis (X) and thus perpendicular to the rotational axis (X). A "radially inner position" thus refers to a position closer to the rotational axis (X) compared to "a radially outer position". A "radial plane" is a plane extending in the radial direction and having a normal extending in the axial direction. In analogy, an "axial plane" is a plane extending in the axial direction and having a normal extending in the radial direction.

The first aspect of the invention is based on the insight that a wireless communication signal may need to be transmitted via a solid transmission window for the signal to be strong enough to be picked up by a receiver outside the centrifuge bowl. This may be due to the thick walls, often stainless-steel walls, of the centrifuge bowl that may otherwise function as a Faraday cage preventing the wireless signal from reaching with enough strength outside the bowl.

The solid transmission window may be a part of the actual interface level sensor or may be a part of the bowl wall. The solid transmission window is thus not a through opening at a liquid outlet of the bowl.

The centrifuge bowl may comprise a lower bowl section, also called bowl body, and an upper bowl section, also called bowl hood, which are releasably fastened to one another. The solid transmission window may be arranged in the bowl hood of the centrifuge bowl.

The solid transmission window may be arranged at a radial position that is above 25% of the radius of the bowl, such as in the periphery of the bowl at a maximum radial level.

The interface level sensor may be configured for detecting the position of at least one interface between separated phases in the centrifuge bowl during operation of the centrifugal separator. The interface level sensor may be configured for detecting the position of at least two interfaces, such as a solid-liquid interface and a liquid-liquid interface, simultaneously during operation of the centrifugal separator.

In embodiments, the interface level sensor comprises at least one sensor element for direct detection of the position of said at least one interface and wherein said transmission means is configured for wireless transmission of information of said position of said at least one interface.

The sensor element may thus be arranged for measuring the position directly (absolute measurement). The at least one sensor element may therefore have a radial extension that covers the possible measured radial levels of the at least one interface. This may be in contrast to indirect measurements, which may include estimation of the position based on some measured parameter.

As an example, the at least one sensor element may comprise a capacitive sensor element.

Provided that the separated phases have a different dielectric constant, a capacitive sensor element may be useful to use. This is normally the case in e.g. oil and water separation. The change of capacitance based on a change in the electrical field around the sensor may thus be used as a measurement signal. Changes in the capacitance may define the position of the interface, one phase may lead to a first capacitance and a second phase may lead to a second capacitance.

As an example, the capacitive sensor element may be a mutual capacitive sensor element or a self-capacitive sensor element.

The sensor element may consist of an electrical circuit, such as an electrical circuit on a printed-circuit board (PCB).

In the present disclosure, the interface level sensor may be arranged for detecting more than one interface during operation. As an example, the interface level sensor may be arranged for detecting a liquid-liquid interface and a solid-liquid interface.

Moreover, in the present disclosure, the interface level sensor may comprise a plurality of sensor elements, such as a plurality of capacitive sensor elements. These may extend in a row or array that at least has some extension in the radial direction when the sensor is arranged in the bowl. As an example, the plurality of sensor elements may be arranged in a row or array that extends in the radial direction when the sensor is arranged in the separator. The sensor may be arranged such that the plurality of sensor elements is arranged radially outside the surface enlarging inserts, such as in the sludge space.

Consequently, in embodiments of the first aspect, the at least one sensor element is arranged in an array of at least four, such as at least eight, sensor elements.

Further, in embodiments, the centrifuge bowl comprises a sludge space radially outside said separation space; and wherein the interface level sensor is arranged with the at least one sensor element in said sludge space.

In embodiments, the interface level sensor comprises at least two sensor elements arranged along a sensing direction (S), and wherein said sensing direction (S) forms an angle with the axis of rotation (X).

As an example, the sensing direction (S) is substantially in the radial direction.

If the at least one sensing elements is arranged in an array, the array may have more sensor elements in one direction, i.e. the array may be elongated in one direction. This direction may be sensing direction (S).

The at least one sensing element may be arranged in a sensing body, which may protect the actual sensing element from the rather harsh conditions that may prevail in the centrifuge bowl during operation. The sensing body may be a n elongated sensing body. The elongation may be in the sensing direction (S) which forms an angle with the axis of rotation (X).

In embodiments, the at least one sensor element is arranged in a sensing body; said sensing body having an outer surface comprising a ceramic.

A ceramic may withstand harsh conditions within the centrifuge bowl. The at least one sensor element may be sandwiched between two outer layers of ceramic material.

As an example, the ceramic may comprise aluminium oxide. Aluminium oxide (Al₂O₃) may be useful in erosive conditions

In embodiments, the interface level sensor further comprises a microcontroller unit (MCU) for interfacing with the at least one sensor element.

The MCU may be an integrated circuit (IC) and may contain for example a processing unit and an input/output unit to interface with the at least one sensor element and the transmission means. The MCU may also comprise a Read Only Memory (ROM) for storing instructions and a Read Write Memory (RAM) for temporary storage during execution.

The interface level sensor may comprise a plurality of sensor elements and the MCU may be configured to interface with the plurality of sensor elements. As an example, the MCU may be configured to interface with the plurality of sensor elements using the same integrated circuit, such as a single integrated circuit. Such a plurality of sensor elements may be a plurality of capacitive sensor elements.

The MCU interfacing with the at least one sensor elements may thus comprise the MCU reading the capacitance of at least one capacitive sensor element. Thus, the MCU may be configured for capacitance measurements.

The MCU may further be configured for interfacing with the transmission means.

As an example, the MCU may be arranged on a printed circuit board (PCB).

Further, the PCB may be a rigid-flex PCB.

In embodiments, also the at least one sensing element is arranged on the same PCB as the MCU. Thus, the interface level sensor may comprise a single PCB with both sensor elements and the MCU.

However, in embodiments, the at least one sensor element is arranged on a PCB other than the PCB used for the MCU. Thus, the interface level sensor may comprise a first PCB onto which the MCU is arranged, and possibly also a power supply unit, such as batteries, and transmission means, such as an antenna, and a second PCB onto which the at least one sensor element is arranged. The first PCB may thus be of a different type than the second PCB. The first PCB, comprising the at least one sensor element, may be a ceramic PCB.

The first and second PCBs may be welded together. In embodiments, the centrifugal separator comprises a power supply unit for providing electric current to the interface level sensor.

The power supply unit may also be arranged for providing current to an MCU as discussed above, and to the transmission means.

In embodiments, the power supply unit comprises a coil mounted in said rotatable part so that a voltage may be induced in said coil by an external magnetic field during rotation of the rotatable part.

As an example, the coil of may be arranged in said interface level sensor.

Thus, the centrifugal separator may comprise at least one magnet arranged in the frame for inducing a current in the coil. As an alternative, the centrifugal separator may comprise coil in the frame which may be used for creating the magnetic field used for inducing a current in the coil in the rotatable part. Thus, the centrifugal separator may comprise an electromagnet.

Consequently, in embodiments, the power supply unit comprises a coil in the frame and a coil in the interference level sensor arranged such that a current in the coil in the frame may generate a current in the coil of the sensor when the sensor passes the coil of the frame.

Thus, the rotational movement during operation of the centrifugal separator may be used for inducing a voltage in a coil that is arranged in the interface level sensor.

In embodiments, the power supply unit is arranged in the interface level sensor. This means that the power supply unit may be arranged within the same unit as at least one of, or all of, the sensor elements, the MCU and the transmission means.

The power supply unit may thus be one or several batteries.

As an example, the power supply unit comprises at least one button cell battery.

The button cell battery may have a bottom body forming the positive terminal and a top cap forming the negative terminal. The inventors have found that a button cell battery may withstand the high centrifugal forces experienced within a centrifuge bowl during operation.

The power supply unit may comprise at least two button cell batteries.

In embodiments, the at least one button cell battery has a bottom body forming the positive terminal and a top cap forming the negative terminal, and wherein the at least one button cell battery is arranged such that the top cap is at a radial position that is closer to the rotational axis (X) than the radial position of the bottom body.

Such an arrangement of the button cell battery may decrease the risk of battery electrolyte leakage when the battery is subjected to high centrifugal forces.

As an example, the interface level sensor may be arranged in the centrifugal separator such that the normal to the surface of the bottom body is substantially in the radial direction.

Thus, the normal to the outer surface of the bottom body may be aligned radially. In other words, the overall squat cylindrical shape of the button cell battery may be arranged in the interface level sensor such that the base surfaces are parallel with the axis of rotation (X) when the interface level sensor is mounted in the centrifugal separator.

In embodiments, the transmission means comprises an antenna configured for radiofrequency (RF) signalling.

The antenna may for example be arranged for digital RF signalling.

The RF signalling may for example be Bluetooth signalling, which may be beneficial for the distance between the transmission means and the receiver.

The centrifuge bowl may be of stainless steel, and the ceramic material may thus have a higher transmission capacity for the wireless communication signal than stainless steel.

In embodiments, the transmission window comprises a ceramic material.

As an example, the ceramic material may comprise aluminium oxide.

In embodiments, the interface level sensor is implemented as a single and replaceable unit in the centrifugal separator and comprises at least one sensor element, a microcontroller unit (MCU) for interfacing with the at least one sensor element, a power supply unit and said transmission means.

The interface level sensor may thus be provided as a single unit that may be inserted and/or replaced in the centrifuge bowl. This is an advantage since it decreases or removes the need for having cords between separate components of the sensor within the bowl. The sensor element, MCU, power supply unit and the transmission means may be as discussed herein above. The power supply unit of the single and replaceable unit may thus be one or several batteries or a coil if the sensor is to be powered wirelessly from the frame. Such coil may thus be arranged for generating a current when interacting with a magnetic field, such as a magnetic field generated by a magnet or coil in the frame.

As an example, said transmission window may also form a part of said single and replaceable unit.

Moreover, the centrifugal separator and interface level sensor may be arranged so that the interface level sensor is replaceable from outside of the centrifuge bowl. Thus, this allows for simplified maintenance and/or replacement of the single unit.

As a further example, the interface level sensor comprises a cover body covering said MCU, power supply unit and transmission means. Thus, the single and replaceable unit may have a cover that covers the most sensible parts of the interface level sensor.

The cover body may comprise or consist of stainless steel.

Further, also said transmission window may be arranged in said cover body. The transmission window may thus be in the form of e.g. a lid covering the transmission means and having a high transmittance for e.g. radio signals

In the single and replaceable unit, the at least one sensor element may be arranged outside of the cover body. Consequently, in examples, the single and replaceable unit comprises a sensing body extending from said cover body and wherein said sensing body comprises said at least one sensor element.

Moreover, the interface level sensor may be arranged in the centrifugal separator with the sensing body at a radial position that is closer to the axis of rotation (X) than said cover body. The sensing body may thus extend into the bowl from e.g. one of the surrounding walls of the centrifuge bowl, Thus, when inserted in the outer wall of the centrifuge bowl at least a part of, or a majority of, the cover body may be arranged in the surrounding wall. This may provide for little interference with the separation process within the centrifuge bowl. Consequently, in examples, the interface level sensor is arranged such that said cover body is positioned at least partly in the outer wall of the centrifuge bowl.

Further, the transmission window may be facing the outside of the centrifuge bowl. This may thus provide for good signalling.

The single and replaceable unit may be provided in several types of centrifugal separators, such as at the outermost, periphery of the centrifuge bowl. As an example, the centrifugal separator may be arranged for continuous discharge of a separated sludge phase from a plurality of sludge outlets distributed around the periphery of the centrifuge bowl, and wherein said interface level sensor is arranged at the position of one of said sludge outlets; thereby replacing one of said sludge outlets.

Thus, one of the permanently open nozzles for discharging a sludge phase may be permanently "blocked" by the insertion of the single and replaceable sensor. However, the single and replaceable sensor may also be provided at other locations in a separator for continuous discharge of a solids phase. As an example, such sensor may be provided at the outermost periphery, but in between two adjacent permanently open nozzles.

The interface level sensor of the present disclosure may also be provided in a centrifugal separator for intermittent discharge of the sludge phase. Such separator are known in the art and utilizes a sliding bowl bottom for opening a set of outlets in the periphery of the centrifuge bowl during fractions of a second to discharge a solids content from the bowl. In such a separator, the interface level sensor, for example in the form of a single and replaceable unit as discussed above, may be arranged axially above the sliding bowl bottom and the intermittently openable sludge outlets. Consequently, in examples, the centrifugal separator is arranged for intermittent discharge of a separated sludge phase from a plurality of sludge outlets distributed around the periphery of the centrifuge bowl, and wherein said solid transmission window is arranged axially above said sludge outlets.

In a centrifugal separator arranged for intermittent discharge, the interface level sensor may thus be arranged axially above the sludge outlets but still at a large radius, such that the solid transmission window is arranged within or above a lock ring used to hold the lower bowl section an upper bowl section together.

In embodiments, the centrifugal separator is further comprising a receiver configured for receiving said wireless transmission of information of said at least one interface from said transmission means.

The receiver may for example be adapted to receive radio signals from the transmission means. As an example, the receiver may be arranged in said frame.

The frame, or hood of the frame, surrounds the centrifuge bowl but still provides a distance between the frame and the bowl, e.g. for providing the discharge of a solids phase to the space formed between the frame and the centrifuge bowl. Thus, in embodiments, the receiver is arranged at a minimal distance that is at least 50 mm, such as at least 100 mm from the outer periphery of the centrifuge wall or the solid transmission window.

As a configuration of the first aspect, there is provided a centrifugal separator for separating at least one liquid phase from a liquid feed mixture, comprising
a frame, a drive member and a rotatable part,
wherein the drive member is configured to rotate the rotatable part in relation to the frame around an axis of rotation (X), and
wherein the rotatable part comprises a centrifuge bowl enclosing a separation space;
wherein the separation space comprises surface enlarging inserts for increasing the separation performance of the centrifugal separator;
and wherein the centrifugal separator further comprises
an interface level sensor for detecting at least one interface between separated phases in the centrifuge bowl during operation of the centrifugal separator; said interface level sensor comprising at least one capacitive sensor element; and
transmission means configured for wireless transmission of information of said at least one interface to a receiver outside of the centrifuge bowl.

Thus, this configuration relates to the insight of using a capacitive sensor element in a sensor for wireless communication in a centrifugal separator having surface enlarging inserts, such as separation discs. Effects and features of this configuration is largely analogous to those described above in connection with the first aspect. Embodiments mentioned in relation to the first aspect above are of course compatible with this configuration of the first aspect.

As a further configuration of the first aspect, there is provided a centrifugal separator for separating at least one liquid phase from a liquid feed mixture, comprising
a frame, a drive member and a rotatable part,
wherein the drive member is configured to rotate the rotatable part in relation to the frame around an axis of rotation (X), and
wherein the rotatable part comprises a centrifuge bowl enclosing a separation space;
wherein the separation space comprises surface enlarging inserts for increasing the separation performance of the centrifugal separator;
and wherein the centrifugal separator further comprises
an interface level sensor for detecting at least one interface between separated phases in the centrifuge bowl during operation of the centrifugal separator;
wherein the interface level sensor is formed as a single and replaceable unit in the centrifugal separator and comprises at least one sensor element, a microcontroller unit (MCU) for interfacing with the at least one sensor element, a power supply unit and transmission means configured for wireless transmission of information of said at least one interface to a receiver outside of the centrifuge bowl.

Thus, this configuration relates to the insight of using an interface level sensor as a single and replaceable unit in a centrifugal separator having surface enlarging inserts, such as separation discs. Effects and features of this configuration is largely analogous to those described above in connection with the first aspect. Embodiments mentioned in relation to the first aspect above are of course compatible with this configuration of the first aspect.

As a further configuration of the first aspect, there is provided a centrifugal separator for separating at least one liquid phase from a liquid feed mixture, comprising
a frame, a drive member and a rotatable part,
wherein the drive member is configured to rotate the rotatable part in relation to the frame around an axis of rotation (X), and
wherein the rotatable part comprises a centrifuge bowl enclosing a separation space;
and wherein the centrifugal separator further comprises
an interface level sensor for detecting at least one interface between separated phases in the centrifuge bowl during operation of the centrifugal separator; and
transmission means configured for wireless transmission of information of said at least one interface to a receiver outside of the centrifuge bowl;
wherein the interface level sensor further comprises a power supply unit for providing electric current to the interface level sensor in the form of at least one button cell battery; and
wherein said at least one button cell battery has a bottom body forming the positive terminal and a top cap forming the negative terminal, and wherein the at least one button cell battery is arranged such that the top cap is at a radial position that is closer to the rotational axis (X) than the radial position of the bottom body.

As an example, the interface level sensor may be arranged in the centrifugal separator such that the normal to the surface of the bottom body is substantially in the radial direction.

Further, the separation space may comprise surface enlarging inserts for increasing the separation performance of the centrifugal separator.

Thus, this configuration relates to the insight of the orientation of button cell batteries when using such batteries in an interface level sensor in a centrifugal separator. Effects and features of this configuration is largely analogous to those described above in connection with the first aspect. Embodiments mentioned in relation to the first aspect above are of course compatible with this configuration of the first aspect.

The centrifugal separator according to the first aspect and the configurations of the first aspect discussed herein is for separation of a liquid feed mixture. The liquid feed mixture may be an aqueous liquid or an oily liquid. As an example, the centrifugal separator may be for separating solids and potentially also another liquid, from the liquid feed mixture. The liquid mixture may for example be an oily mixture such as lubricating oil or mineral oil, an aqueous mixture. The centrifugal separator may also be used for de-sanding bitumen froth recovered from oil sands.

The centrifugal separator comprises a frame, i.e. a non-rotatable part and the rotatable part may be supported by the frame by at least one bearing device. The rotatable part may comprise a rotatable shaft, i.e. a spindle, and the centrifuge bowl is usually supported by and mounted to rotate with the spindle. The frame may also enclose the centrifuge bowl, thus forming a space in which the centrifuge bowl is arranged.

The axis of rotation (X) may extend vertically. Consequently, the centrifugal bowl may be arranged such that the centrifuge bowl is supported by the spindle at one of its ends, such at the top end of the spindle.

The centrifugal separator further comprises a drive member for rotating the rotatable part. The drive member may comprise an electrical motor or be provided beside the spindle and rotate the spindle and centrifuge bowl by a suitable transmission, such as a belt or a gear transmission.

The separation space within the centrifuge bowl is where the separation between the phases takes place during operation. Surface enlarging inserts are usually arranged in that separation space. Such surface enlarging insert may be a stack of separation discs. The separation discs may be of metal. Further, the separation discs may be frustoconical separation discs, i.e. having separation surfaces forming frustoconical portions of the separation discs. The separation discs may be arranged coaxially around the axis of rotation (X) at a distance from each other to form passages between adjacent separation discs. The interspaces or passages between the discs are provided by distance arranged on the surface of the separation discs. In the formed interspaces, separation takes place during operation.

The centrifugal separator also comprises an inlet for liquid feed mixture to be separated. The liquid feed mixture may be supplied to the inlet via stationary inlet pipe extending into the centrifuge bowl, such as from the top of the centrifuge bowl. Alternatively, the liquid feed mixture may be supplied via a duct in the rotating spindle.

The centrifuge bowl comprises at least one liquid outlet for a separated liquid phase. The centrifugal separator may be arranged for also separating a solids phase, or a sludge phase, from the liquid feed mixture. In such cases, the centrifugal separator may be provided with sludge outlets at the periphery of the centrifuge bowl. Such sludge outlets may be open nozzles arranged for a continuous discharge of a sludge phase. As an alternative, the sludge outlets is in the form of a set of intermittently openable outlets. Such outlets may be in the form of a plurality of peripheral ports that extend from the centrifuge bowl to a surrounding space outside the centrifuge bowl. The peripheral ports may be intermittently openable during a short time period, e.g. in the order of a fraction of a second, and permit total or partial discharge of sludge from the centrifuge bowl, using a conventional intermittent discharge system as known in the art.

The open nozzles or the intermittently openable outlets may be equidistantly spaced around the axis of rotation (X). However, it is also to be understood that the centrifugal separator may be free of any outlets from separated sludge.

The centrifugal separator may also be arranged for separating more than one liquid phase from the liquid feed mixture. Therefore, the centrifuge bowl may be provided with a first liquid outlet for a liquid light phase and a second liquid outlet for a liquid heavy phase. The liquid heavy phase has thus a density that is higher than the density of the liquid light phase. The second liquid outlet may therefore be arranged at a larger radial distance then the first liquid outlet.

Consequently, in embodiments, the centrifugal separator is arranged to separate the liquid feed mixture into a liquid light phase, a liquid heavy phase and a solids phase.

However, the liquid feed mixture may be separated to a single liquid phase and e.g. a solids phase. In such case, there is only one outlet for a separated liquid phase.

The present invention also relates to an interface level sensor as such. Thus, as a second aspect of the invention, there is provided an interface level sensor for detecting at least one interface between separated phases in a centrifuge bowl of a centrifugal separator; said interface level sensor comprising
at least one sensor element for detecting said at least one interface;
a power supply unit for providing electric current to the interface level sensor;
a microcontroller unit (MCU) for interfacing with the at least one sensor element;
transmission means configured for wireless transmission of information of said at least one interface to a receiver;
wherein said interface level sensor is formed as a single, replaceable unit.

The interface level sensor may thus be adapted for being used in a centrifuge bowl of a centrifugal separator. The interface level sensor may be as discussed in relation to the centrifugal separator of the first aspect above. Consequently, in embodiments, said sensor comprises an elongated sensing body in which said at least one sensor element is arranged. As an example, said sensing body may have an outer surface comprising a ceramic. The ceramic may comprise aluminium oxide.

In embodiments of the second aspect, said power supply unit comprises at least one button cell battery. The least one button cell battery has a bottom body forming the positive terminal and a top cap forming the negative terminal, and wherein the at least one button cell battery is arranged such that the bottom body is arranged at a position that is closer to said sensing body.

Further, as an example, said sensing body may be elongated in a sensing direction (S) and wherein the normal to the surface of the bottom body of the at least one button cell battery is substantially in the same direction as the sensing direction (S).

In embodiments of the second aspect, said power supply unit is a coil adapted for generating a current in the vicinity of a magnetic field.

In embodiments of the second aspect, the MCU is arranged on a printed circuit board (PCB).The PCB may be a rigid-flex PCB.

Moreover, the at least one sensing elements may be arranged on the same PCB as the MCU, or on a separate PCB than the MCU.

In embodiments of the second aspect, wherein the interface level sensor comprises an elongated sensing body in which said at least one sensor element is arranged and a cover body covering said MC, power supply unit and transmission means, and wherein said sensing body extends from said cover body.

Further, the interface level sensor of the second aspect may also comprise a transmission window, such as a transmission window arranged in said cover body.

As an example, said cover body may comprise stainless steel.

In embodiments of the second aspect, the transmission means comprises an antenna configured for radiofrequency (RF) signalling.

As a third aspect of the invention, there is provided a system for detecting at least one interface between separated phases in a centrifuge bowl of a centrifugal separator; said system comprising
- an interface level sensor according to the second aspect;
- a receiver configured for receiving said wireless transmission of information of said at least one interface from said transmission means; and
- a control unit configured for sending operational request to a centrifugal separator based on the information of said at least one interface that is received by said receiver.

This aspect may generally present the same or corresponding advantages as the former aspects discussed above. Effects and features of this third aspect are largely analogous to those described above in connection with the previous aspects. Embodiments mentioned in relation to the first and second aspects are largely compatible with the third aspect.

The receiver may be adapted to convert the wireless signal to a usable form by the control unit. Thus, the receiver may comprise an antenna for intercepting the wireless signal and be configured for converting the received wireless signal to e.g. a digital signal. The receiver may thus be a radio receiver.

The control unit may comprise a communication interface for communicating with the receiver and the centrifugal separator and for receiving information from the receiver. The control unit may further comprise a processing unit and computer program products configured for sending operational requests to the centrifugal separator, such as to a control system for controlling the operation of the centrifugal separator or to one or several throttle valves arranged downstream of the liquid outlet or outlets of the centrifugal separator.

The operational requests may be based on analysis of received data from the receiver. Therefore, the processing unit, such as a central processing unit, may be configured to execute computer code instructions. The processing unit may be in the form of a hardware component, such as an application specific integrated circuit, a field- programmable gate array or the like.

In embodiments, the receiver is part of the control unit.

In embodiments, the control unit is the same control unit which is used for controlling the operation of a centrifugal separator.

As a fourth aspect of the invention, there is provided a separation system for separating at least one liquid phase from a liquid feed mixture, said system comprising
- a centrifugal separator according to the first aspect,
- a receiver configured for receiving said wireless transmission of information of said at least one interface from the transmission means of the interface level sensor of said centrifugal separator; and
- a control unit configured for sending operational request to said centrifugal separator based on the information of said at least one interface that is received by said receiver.

This aspect may generally present the same or corresponding advantages as the former aspects discussed above. Effects and features of this fourth aspect are largely analogous to those described above in connection with the previous aspects. Embodiments mentioned in relation to the first and second aspects are largely compatible with the fourth aspect.

The receiver may be arranged in the frame of the centrifugal separator, such as in the hood of the frame surrounding the centrifuge bowl.

As discussed in relation to the first aspect above, the centrifugal separator comprises at least one liquid outlet for a separated liquid phase, such as a first liquid outlet for a separated liquid light phase and a second liquid outlet for a separated liquid heavy phase. The liquid heavy phase thus has a higher density than the liquid light phase. Some or all of the liquid outlets may be sealed, such as sealed using a liquid seal or a mechanical seal. Some or all of the liquid outlets may be hermetic outlets. Further, also the inlet may be sealed using a mechanical seal. Thus, the inlet may also be a hermetic inlet.

In embodiments, said operational requests comprises operations for adjusting the radial level of at least one interface between separated phases in the centrifuge bowl during operation of the centrifugal separator.

Thus, the interface level sensor may be used in a feedback system for keeping the interface level at a certain setpoint or within a certain interval.

As an example, the operational requests may comprise changing the counter pressure downstream of at least one liquid outlet for a separated liquid phase in the centrifugal separator.

Therefore, the separation system may comprise a throttle valve downstream one or all of the liquid outlets. Adjusting the counter pressure from such a throttle valve, the interface level within the centrifuge bowl may be adjusted. In such as example, one or all of the liquid outlets may be mechanically sealed, such as hermetically mechanically sealed.

A mechanical seal used in the context of the present disclosure may be a double seal, i.e. comprising a stationary portion having a first sealing surface and a rotatable portion having a second sealing surface, and the sealing interface may be formed between the first and second sealing surfaces. The sealing interface may extend in the radial plane.

As a fifth aspect of the invention, there is provided a method of separating at least one liquid phase from a liquid feed mixture, comprising the steps of
a) introducing the liquid feed mixture into a centrifugal separator of a separation system according to the fourth aspect;
b) discharging at least one separated liquid phase from said centrifugal separator;
c) detecting at least one interface between separated phases in the centrifuge bowl using the interface level sensor;
d) transmitting information of said at least one interface to the receiver;
e) controlling the position of the at least one interface based on said information received by the receiver.

Step e) may thus comprises controlling the radial position of the interface between separated phases in the centrifuge bowl.

### Brief description of the Drawings

The above, as well as additional objects, features and advantages of the present inventive concept, will be better understood through the following illustrative and non-limiting detailed description, with reference to the appended drawings. In the drawings like reference numerals will be used for like elements unless stated otherwise.
Figure 1 shows a schematic drawing of an interface level sensor.
Figure 2 shows a perspective view of an interface level sensor.
Figure 3 shows a schematic an interface level sensor with the cover portion removed.
Figure 4 shows a schematic drawing of a system for detecting at least one interface between separated phases in a centrifuge bowl of a centrifugal separator.
Figure 5 shows a schematic drawing of a centrifugal separator.
Figure 6 shows a schematic drawing of an example of a centrifuge bowl which forms part of a centrifugal separator.
Figure 7 shows another embodiment of a centrifuge bowl which forms part of a centrifugal separator.
Figure 8 shows a schematic drawing of a separation system for separating at least one liquid phase from a liquid feed mixture.

### Detailed Description

The different aspect of the present disclosure will be further illustrated by the following description with reference to the accompanying drawings.

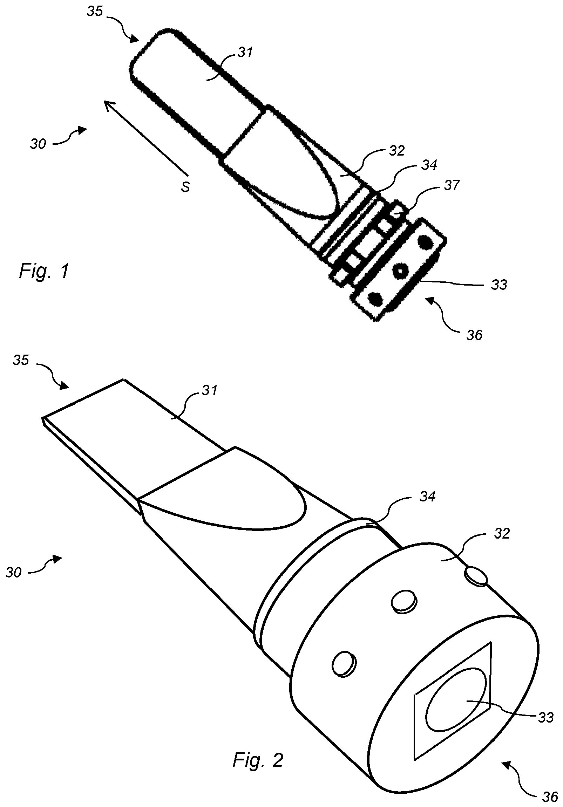

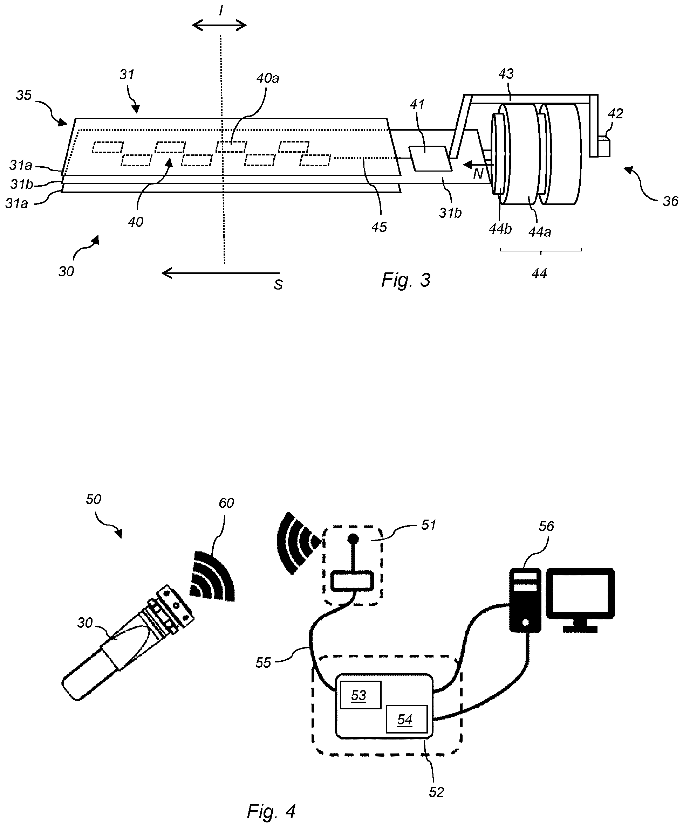

Fig. 1 shows an interface level sensor 30 for detecting at least one interface between separated phases in a centrifuge bowl of a centrifugal separator. The sensor 30 is in the form of a single and replaceable unit and comprises a cover body 32 of stainless steel. Within the cover body 32, there is arranged a power supply unit 44, transmission means 42 for wireless transmission and microcontroller unit (MCU), described in more detail in relation to Fig. 3. The sensor 1 is further comprising flat sensing body 31 extending out from one end of the cover body 32. The sensing elements 40, in this example an array of capacitive sensors, are arranged within the sensing body 31. Thus, the sensing body 31 is arranged in a first end 35 of the sensor 30, whereas the cover body covers the portions of the second end 36 of the sensor 30. The sensing elements 40, more clearly shown in Fig. 3, are arranged along a sensing direction S that extends from the first 35 to second end 36 of the sensor 30.

Arranged in the cover body 32 is also a solid transmission window, in this example a Al₂O₃ lid with a high transmittance for radio signals. The solid transmittance window 33 is arranged in the second end 36 of the sensor 30, as more clearly seen in the perspective view of Fig. 2. Also shown in Figs 1 and 2 are surface elements 37 and O-ring 34, which are arranged on the cover body 32 for fitting into a bowl bushing (not shown) for allowing easy mounting and dismounting into a portion of the outer wall of a centrifuge bowl.

Fig. 3 shows the sensor 30 of Figs 1 and 2 in which the cover body 32 has been removed. During use, the cover body 32 protects and covers a microcontroller unit (MCU) 41, a power supply unit 44 and the transmission means 42. The MCU 41 and the sensing elements 40 may arranged on the same printed circuit board (PCB) 31b, in this example a rigid-flex PCB, or on two different PCBs that are welded together. As an example, the sensing elements 40 may be arranged on a ceramic PCB that is welded onto another PCB, such as a rigid-flex PCB, onto which the MCU is arranged.

The sensor elements 40 is in the form of an array of eight individual capacitive sensors 40 arranged in a two by four array extending with its longest direction in the sensing direction S of the sensing body 31. The PCB 31b and the individual capacitive sensors 40a are sandwiched between two ceramic layers 31a, which protects the sensors from the corrosive environment that it may experience within a centrifuge bowl. The ceramic layers may be of Al₂O₃.

The MCU 41 is in the form of an integrated circuit used for reading all of the individual sensor elements 40a. This may be performed via a single circuit 45. Thus, the MCU 41 may be configured to interface with the sensor elements 40a by reading the capacitance of the sensor elements, e.g. by measuring the response from an electrical impulse . The MCU 41 may for example be a PSoC (programmable system on a chip) and may thus comprise a CPU core and mixed-signal arrays of configurable integrated analog and digital peripherals.

The interface level sensor may comprise a plurality of sensor elements and the MCU may be configured to interface with the plurality of sensor elements. As an example, the MCU may be configured to interface with the plurality of sensor elements using the same integrated circuit. Such a plurality of sensor elements may be a plurality of capacitive sensors.

The individual sensor elements 40a a may be capacitive sensor elements. Since the separated phases in the centrifuge bowl may have different dielectric constants, the array of capacitive sensor elements may determine and sense the position of the interface, as depicted by "I" in Fig. 3. The change of capacitance of an individual sensor element 40a based on the change in electrical field outside the sensor body 31 is sensed and read by the MCU 41. Further, since there are eight individual sensor elements extending a certain distance along the sensing direction "S", more than one interface may be detected. As an example, also a solid-liquid interface and a liquid-liquid interface may both be sensed simultaneously by the sensor 30.

The MCU 41 is further configured for interfacing with the transmission means, which is in the form of an antenna 42 arranged at the second end 36 of the sensor 30. When the cover body 32 is put back on, the antenna 42 is arranged adjacent to the solid transmission window 33 of the sensor body 32. The MCU 41 interacts with the antenna via circuit 43. The antenna 42 is in this example configured for Bluetooth signalling of the information of the position of one or two interfaces.

The MCU 41, the antenna 42 and the sensor elements 40a are powered by current from power supply unit 44, in this case in the form of two 3V lithium button cell batteries that are arranged under the cover body 32. Each button cell battery 44 has a bottom body 44a forming the positive terminal and a top cap 44b forming the negative terminal. The button cell batteries 44 are arranged so that the normal N to the surface of the bottom body 44a and is substantially in the same direction as the sensing direction S, i.e. in the direction from the second end 36 to the first end 35 of the sensor 30.

As an alternative, the power supply unit 44 could be in the form of a coil arranged such that a current may be induced in the coil by an external magnetic field, such as a magnetic field generated by magnets or coils arranged outside of the interface level sensor 30.

Fig. 4 schematically shows a system 50 for detecting at least one interface between separated phases in a centrifuge bowl. The system 50 comprises the sensor 30 as discussed in relation to Figs. 1-3 above as well as a receiver 51 configured for receiving the wireless transmission of information of said at least one interface from the antenna 42 of the sensor 30. Further, the system comprises a control unit 52 configured for sending operational request to a centrifugal separator 1 based on the information that is received by the receiver 51. The receiver 51 comprises an antenna and is adapted to intercepting the Bluetooth signal from the antenna 42 configured for converting the received signal to a digital signal that is sent to the control unit 55 via cable 55.

The control unit 52 is equipped with a communication interface 53 for communicating with the receiver 51 and a processing unit 54 in the form of a central processing unit configured to execute computer code instructions. The processing unit may be in the form of a hardware component, such as an application specific integrated circuit, a field-programmable gate array or the like. Further, the communication interface 53 is configured for communicating with the control system 56 of a centrifugal separator, and to send operational request to the control system 56 based on the measured interface level. In this way, the system 50 may be used as at least a part of a feedback system for keeping the position of at least one interface at a certain setpoint or within a certain interval. The control unit 52 could be a separate unit or be part of the control unit 56 which is used for controlling the normal operation of a centrifugal separator, such as the rotational speed and the flow speed of the incoming feed that is to be separated.

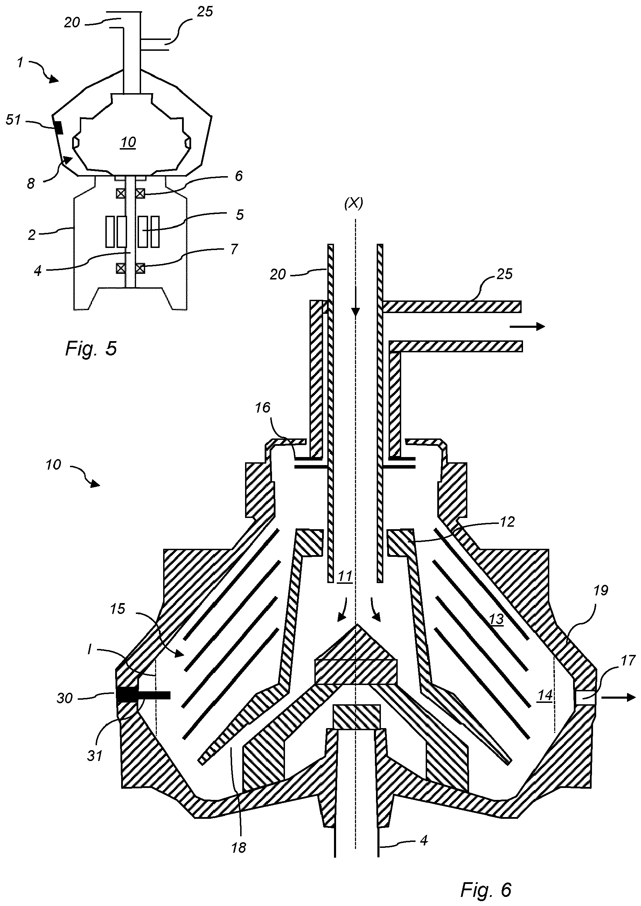

Figs. 5 and 6 schematically show a centrifugal separator and the centrifuge bowl of the centrifugal separator in which the interface level sensor 30 as described in relation to Figs. 1-3 may be used.

Fig. 5 shows a cross-section of an embodiment of a centrifugal separator 1 configured to separate a sludge phase and a liquid heavy phase from a liquid feed mixture. The centrifugal separator 1 has a rotatable part 8 comprising the centrifuge bowl 10 and drive spindle 4.

The centrifugal separator 1 is further provided with a drive motor 5. This motor 5 may for example comprise a stationary element and a rotatable element, which rotatable element surrounds and is connected to the spindle 4 such that it transmits driving torque to the spindle 4 and hence to the centrifuge bowl 10 during operation. The drive motor 5 may be an electric motor. Alternatively, the drive motor 5 may be connected to the spindle 4 by transmission means such as a drive belt.

The centrifuge bowl 10, shown in more detail in Fig. 6, is supported by the spindle 4, which is rotatably arranged in a stationary frame 2 around a vertical axis of rotation (X) in a bottom bearing 7 and a top bearing 6. The stationary frame 2 surrounds centrifuge bowl 10. As seen in Fig. 5, a receiver 51 for the wireless transmission signal from the antenna of the liquid interface sensor is arranged in the portion of the frame 2 that surrounds the centrifuge bowl 10.

In the centrifugal separator 1 as shown in Fig. 1, liquid feed to be separated is fed from the top to the centrifuge bowl 10 via a stationary inlet pipe 20 extending into the centrifuge bowl 10.

After separation has taken place within the centrifuge bowl 10, separated liquid phase is discharged through a first liquid outlet 16 to stationary outlet pipe 25 at the top. Separated sludge are continuously discharged via sludge outlets 17 in the form of open nozzles at the periphery of the centrifuge bowl 10.

Fig. 6. shows a more detailed view of the centrifuge bowl 10 of the centrifugal separator 1.

The stationary inlet pipe 20 extends into the centrifuge bowl 10 axially from the top to a central inlet chamber 11 within the bowl 10. The stationary inlet pipe 20 is thus arranged for supplying the liquid feed mixture to the central inlet chamber 11, which is arranged within the distributor 12. This distributor 12 is designed to accelerate and guide the liquid feed mixture from the central inlet chamber 11, via channels 18 to the separation space 13, in which a stack 15 of separation discs is arranged.

The separation discs of stack 15 is arranged coaxially around the axis of rotation (X) and thus arranged to rotate together with the centrifuge bowl 10. The stack 15 is supported at its axially lowermost portion by the distributor 12. The separation discs of the disc stack 15 are frustoconical and extend outwardly and downwardly from the distributor 12. It should be noted that the separation discs also could extend outwardly and upwardly, or be formed as axial sheets, such as axial sheets having a curved cross-section in a radial plane.

The separation discs of the stack 20 are provided at a distance from each other by means of distance members (not disclosed) in order to form interspaces between adjacent separation discs, i.e. an interspace between each pair of adjacent separation discs. The stack 15 of separation discs therefore provide for an efficient separation of the liquid mixture into at least a liquid phase and a solids phase. Depending on the feed mixture, also a liquid heavy phase may be separated between the separation discs in the disc stack 15.

A first liquid outlet 16 in the form of a paring disc is arranged at the top of the centrifuge bowl 10. Separated liquid phase that has passed radially inwards through the disc stack is thus guide out via paring disc 16 to the stationary outlet pipe 25 .

The centrifugal separator 1 further comprises a sludge outlet 17 for separated solids. This sludge outlet 17 is in the form of a set of permanently open nozzles arranged at the periphery of the centrifuge bowl 10. The nozzles are distributed around the rotational axis (X) and each nozzle has a through channel via which liquid and finely divided solids accumulated in the sludge space 14 is continuously ejected from the separating space 13 during operation.

The liquid interface sensor 30 is arranged in the side wall 19 of the centrifuge bowl 10, i.e. the side wall 19 that surrounds the separation chamber 13. The interface level sensor 30 is thus implemented as a single and replaceable unit. The sensor is arranged such that a part of, or the whole, cover body 32 is arranged within the outer wall 19 of the centrifuge bowl 10. The transmission window 36 is facing the outside of the bowl 10 whereas the sensing body 31 extends radially into the sludge space 14 so as to sense the interface "I" between separated solids and liquid. In this example, the sensing body 31 is arranged such that the sensing direction "S" forms is perpendicular to the axis of rotation (X). The sensor 30 is thereby arranged such that the sensing body 31 is at a radial position that is closer to the axis of rotation (X) than the cover body 32.

Further, with this orientation of the sensor 30, the top cap 44b of the button cell batteries 44 is at a radial position that is closer to the rotational axis than the radial position of the bottom body 44a. In fact, the normal "N" of the surface of the top cap 44b is aligned with the sensing direction "S", i.e. the normal "N" of the surface of the top cap 44b is perpendicular to the axis of rotation (X). This decreases the risk of electrolyte escaping from the button cell batteries 44 during operation of the centrifugal separator.

Further, the wall 19 of the centrifuge bowl 19 is of stainless steel, which means that the solid transmission window 33 has a higher transmission capacity for the wireless communication signal - in this case the Bluetooth signal from antenna 42 - than the material of the centrifuge bowl 10. This allows for efficient transmission of the information about the position of the interface "I" as measured by the sensor 30.

The sensor 30 is arranged at the same axial level as the set of open nozzles 17 and arranged within a bushing (not shown) so that the interface level sensor 30 conveniently is replaceable from outside of the centrifuge bowl 10. In other words, the sensor 30 may be replaced without the need for further opening the bowl to get further access to e.g. the separation space 13 or the sludge space 14.

During operation of the separator as shown in Fig. 5 and 6, the centrifuge bowl 10 is brought into rotation by the drive motor 5. Via the stationary inlet pipe 20, liquid feed mixture to be separated is brought into the central inlet chamber 11 and further guided in channels 18 the annular separation chamber 12. Depending on the density, different phases in the liquid feed mixture is separated between the separation discs of the stack 15. Heavier component, such as a sludge phase, move radially outwards between the separation discs to the radially outer sludge space 14. Separated liquid phase moves radially inwards between the separation discs and is forced through the liquid light phase outlet 16 to the stationary outlet pipe 25. Thus, during separation, an interface "I" between the liquid and solids is formed in the centrifuge bowl 10, and the position of this interface "I" is measured by sensor 30 and information of the position is transmitted via antenna 42 to the receiver 51. Solids, or sludge, that accumulate at the periphery of the separation space 12 is continuously ejected from the nozzles 17 by means of centrifugal force.

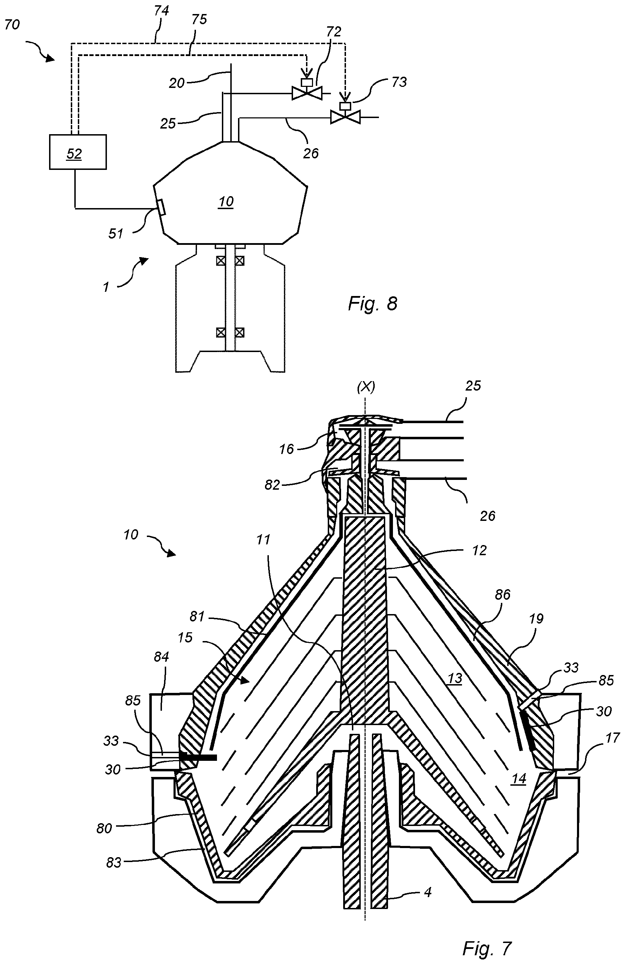

The interface level sensor 30 of the present disclosure may also be used in a centrifugal separator arranged for intermittent discharge of a separated sludge phase. Fig. 7 schematically shows the centrifuge bowl 10 of such a centrifugal separator. In this separator, the liquid feed mixture to be separated is introduced to the inlet 11 from the bottom of the centrifuge bowl via a central inlet duct in the rotatable spindle 4. Liquid feed mixture is guided within or under the distributor 12 to the separation space 13 in which the stack 15 of separation discs is arranged.

The radially inner portion of the disc stack 15 communicates with a first liquid outlet 16 for a separated liquid light phase of the liquid feed mixture. The top disc 11 and an upper inner wall 19 of the centrifuge bowl 10 delimits at least one channel 86 extending from the sludge space 14 towards a central portion of the centrifuge bowl 10. A second liquid outlet 82 for a separated liquid heavy phase is arranged in an outlet chamber which is in fluid communication with the at least one channel 86 for discharge of a separated liquid heavy phase. Separated liquid light phase is discharged to stationary outlet pipe 25 and separated liquid heavy phase is discharge to stationary outlet pipe 26.

The centrifuge bowl 10 is further provided with outlets 17 at the radially outer periphery of the sludge space 14. These outlets 17 are evenly distributed around the rotor axis (X) and are arranged for intermittent discharge of a sludge component of the liquid feed mixture. The sludge component comprises denser particles forming a sludge phase. The opening of the outlets 17 is controlled by means of an operating slide 80 actuated by operating water in channel 83, as known in the art. In its position shown in the drawing, the operating slide 80 abuts sealingly at its periphery against an upper portion of the centrifuge bowl 10, thereby closing the sludge space 14 from connection with outlets 17, which are extending through the centrifuge bowl 10.

The inlet and the two liquid outlets of the centrifugal separator in Fig. 7 may be sealed by means of mechanical seals, which forms a sealing interface between a stationary ring and a rotatable ring, as known in the art.

In the centrifuge bowl 10 arranged for intermittent discharge of a sludge phase, the solid transmission window 33 of the interface level sensor 30 may be arranged axially above the sludge outlets 17. The left-hand side of the centrifuge bowl of Fig. 7 shows an interface level sensor 30 extending into the sludge space 14 at an axial position that is above the sludge outlets 17. This sensor 30 is arranged with its sensing body arranged substantially in the radial direction. Further, there is a small channel 85 extending through the lock ring 84 of the centrifuge bowl 10. This lock ring is used to hold the lower bowl section an upper bowl section together. Further, the solid transmission window 33 is in this example a separate piece from the rest of the interface level sensor 30 and arranged in the outer wall of the lock ring 84. Thus, the transmission from the antenna of the sensor 30 may be guided in the channel 30 and out via window 33.

The right-hand side of Fig. 7 shows an alternative position of the interface level sensor 30. Here, the interface level sensor 30 is aligned with the inner surface of the upper bowl portion 19. The sensing direction S of the sensor, as discussed in relation to Figs 1-3 above, still forms an angle with the axis or rotation (X), i.e. the sensor 30 may is able to detect radial shifts in an interface position within the centrifuge bowl 10. It is to be understood that the sensor 30 also may have this orientation in a separator for continuous discharge of a sludge phase, such as in the separator of Fig. 6. Moreover, the sensor 30 shown in the right-hand side of Fig. 7 has its solid transmission window 33 in an axial position that is above the lock ring 84, and the transmission signal may be guided in a small channel 33 in the upper portion 19 of the centrifuge bowl wall 19 from the sensor 30 to the transmission window 33.

Fig. 8 shows a separation system 8 in which the interface level sensor 30 may be used for actively controlling the radial position of at least one interface between separated phases within the centrifuge bowl 10 during operation. The centrifugal separator 1 comprises a centrifuge bowl 10 with two liquid outlets which discharge separate liquid light phase to stationary outlet pipe 25 and a separated liquid heavy phase to stationary outlet pipe 26. In this example, the centrifugal separator 10 is fed from the top, i.e. liquid mixture to be separated is guide into the bowl 10 via inlet pipe 20 extending into the bowl from the top.

Further, the separation system 70 comprises a throttle valve 72 downstream of the liquid light phase outlet for throttling the separated liquid light phase in the stationary outlet pipe 25 and a throttle valve 73 downstream of the liquid heavy phase outlet for throttling the separated liquid heavy phase in the stationary outlet pipe 26. The liquid outlets, as well as the inlet, of the centrifugal separator 1 are mechanically hermetically sealed. Thus, in contrast to separators having a pairing disc at the liquid outlets, the mechanically hermetically sealed separator has no liquid-air interfaces at the outlets. The throttle valves 72 and 73 may be used for adjusting the counter pressures of any of the liquid outlets and thereby also the counter pressure with respect to the other liquid outlet. This allows for adjusting the radial interface level between the separated liquid light phase and heavy phase within the centrifuge bowl 10.

The separation system 70 further comprises a receiver 51 configured for receiving the wireless transmission of information of at least one interface from the antenna of the interface level sensor 30. This receiver is arranged in the frame of the centrifugal separator 1. Moreover, the system 70 also comprises a control unit 52, such as a control unit discussed in relation to Fig. 4 above, for sending operational request to the centrifugal separator 1 based on the information of the least one interface that is received by said receiver 51. In the setup of Fig. 8, the operational requests comprises requests for adjusting the radial level the least one interface. For this purpose the control unit is configured for adjusting the counter pressure - or for sending operational requests to another unit of the system for adjusting the counter pressure - of the throttle valves 72 and 73 respectively, as indicated by dotted arrows 74 and 75 in Fig. 8. Thus, the system 70 provides for using the position of one or several interfaces within the bowl 10 as detected by the sensor 30 for actively regulating and keeping the interface level position (or positions) at a desired setpoint or within a desired interval. This operation is performed by adjusting the counter pressures of the liquid outlets in response to the detected radial positions.

The invention is not limited to the embodiment disclosed but may be varied and modified within the scope of the claims set out below. The invention is not limited to the orientation of the axis of rotation (X) disclosed in the figures. The term "centrifugal separator" also comprises centrifugal separators with a substantially horizontally oriented axis of rotation. In the above the inventive concept has mainly been described with reference to a limited number of examples. However, as is readily appreciated by a person skilled in the art, other examples than the ones disclosed above are equally possible within the scope of the inventive concept, as defined by the appended claims.

### ITMEIZED LISTING OF EMBODIMENTS

The following is a non-limiting and itemized listing of embodiments of the present disclosure, presented for the purpose of describing various features and combinations provided by the invention in certain of its aspects.
1. A centrifugal separator (1) for separating at least one liquid phase from a liquid feed mixture, comprising
   a frame (2), a drive member (5) and a rotatable part (8),
   wherein the drive member (5) is configured to rotate the rotatable part (8) in relation to the frame (2) around an axis of rotation (X), and
   wherein the rotatable part (8) comprises a centrifuge bowl (10) enclosing a separation space (13);
   wherein the separation space (13) comprises surface enlarging inserts (15) for increasing the separation performance of the centrifugal separator (1);
   and wherein the centrifugal separator (1) further comprises
   an interface level sensor (30) for detecting at least one interface between separated phases in the centrifuge bowl (10) during operation of the centrifugal separator (1); and
   transmission means (42) configured for wireless transmission of information of said at least one interface to a receiver (51) outside of the centrifuge bowl (10);
   and wherein the centrifugal separator (1) comprises a solid transmission window (33) arranged in the wall of the centrifuge bowl (10); said solid transmission window (33) having a higher transmission capacity for the wireless communication signal than the material of the centrifuge bowl (10).
2. A centrifugal separator (1) according to item 1, wherein the interface level sensor (30) comprises at least one sensor element (40a) for direct detection of the position of said at least one interface and wherein said transmission means (42) is configured for wireless transmission of information of said position of said at least one interface.
3. A centrifugal separator (1) according to item 2, wherein the at least one sensor element (40a) comprises a capacitive sensor element.
4. A centrifugal separator (1) according to any one of items 2-3, wherein the at least one sensor element (40a) is arranged in an array (40) of at least four, such as at least eight, sensor elements (40a).
5. A centrifugal separator (1) according to any one of items 2-4, wherein the centrifuge bowl (10) comprises a sludge space (14) radially outside said separation space (13); and wherein the interface level sensor (30) is arranged with the at least one sensor element (40a) in said sludge space (14).
6. A centrifugal separator (1) according to any one of items 2-5, wherein the interface level sensor (30) comprises at least two sensor elements (40a) arranged along a sensing direction (S), and wherein said sensing direction (S) forms an angle with the axis of rotation (X).
7. A centrifugal separator (1) according to item 6, wherein the sensing direction (S) is substantially in the radial direction.
8. A centrifugal separator (1) according to any one of items 2-7, wherein the at least one sensor element (40a) is arranged in a sensing body (31); said sensing body (31) having an outer surface comprising a ceramic.
9. A centrifugal separator (1) according to item 8, wherein said ceramic comprises aluminium oxide.
10. A centrifugal separator (1) according to any one of items 2-9, wherein the interface level sensor (30) further comprises a microcontroller unit (MCU) (41) for interfacing with the at least one sensor element (40a)
11. A centrifugal separator (1) according to item 10, wherein the MCU (41) is arranged on a printed circuit board (PCB) (31b).
12. A centrifugal separator (1) according to item 11, wherein the PCB (31b) is a rigid-flex PCB.
13. A centrifugal separator (1) according to item 11 or 12, wherein also the at least one sensing element (40a) is arranged on the same PCB (31b) as the MCU (41).
14. A centrifugal separator (1) according to any one of items 2-13, wherein the centrifugal separator (1) comprises a power supply unit (44) for providing electric current to the interface level sensor (30).
15. A centrifugal separator (1) according to item 14, wherein said power supply unit (44) comprises a coil mounted in said rotatable part (8) so that a voltage may be induced in said coil by an external magnetic field during rotation of the rotatable part (8).
16. A centrifugal separator (1) according to item 15, wherein said coil is arranged in said interface level sensor (30).
17. A centrifugal separator (1) according to item 14, wherein said power supply unit (44) is arranged in the interface level sensor (30).
18. A centrifugal separator (1) according to item 14 or 17, wherein said power supply unit (44) comprises at least one button cell battery (44).
19. A centrifugal separator (1) according to item 18, wherein said at least one button cell battery (44) has a bottom body (44a) forming the positive terminal and a top cap (44b) forming the negative terminal, and wherein the at least one button cell battery (44) is arranged such that the top cap (44b) is at a radial position that is closer to the rotational axis (X) than the radial position of the bottom body (44a).
20. A centrifugal separator (1) according to item 19, wherein the interface level sensor (30) is arranged in the centrifugal separator (1) such that the normal to the surface of the bottom body (44a) is substantially in the radial direction.
21. A centrifugal separator (1) according to any previous item; wherein the transmission means (42) comprises an antenna configured for radiofrequency (RF) signalling.
22. A centrifugal separator (1) according to any previous item, wherein the transmission window (33) comprises a ceramic material.
23. A centrifugal separator (1) according to item 22, wherein the ceramic material comprises aluminium oxide.
24. A centrifugal separator (1) according to any previous item, wherein the interface level sensor (30) is implemented as a single and replaceable unit in the centrifugal separator (1) and comprises at least one sensor element (40a), a microcontroller unit (MCU) (41) for interfacing with the at least one sensor element (40a), a power supply unit (44) and said transmission means (42).
25. A centrifugal separator (1) according to item 24, wherein also said transmission window (33) forms a part of said single and replaceable unit.
26. A centrifugal separator (1) according to any one of items 24 or 25, wherein the centrifugal separator (1) and interface level sensor (30) are arranged so that the interface level sensor (30) is replaceable from outside of the centrifuge bowl (10).
27. A centrifugal separator (1) according to any one of items 24-26, wherein the interface level sensor (30) comprises a cover body (32) covering said MCU (41), power supply unit (44) and transmission means (42).
28. A centrifugal separator (1) according to item 27, wherein said cover body (32) comprises stainless steel.
29. A centrifugal separator (1) according to item 27 or 28, wherein also said transmission window (33) is arranged in said cover body (32).
30. A centrifugal separator (1) according to any one of items 27-29 further comprising a sensing body (31) extending from said cover body (32) and wherein said sensing body (31) comprises said at least one sensor element (40a).
31. A centrifugal separator (1) according to item 30, wherein said interface level sensor (30) is arranged in the centrifugal separator (1) with the sensing body (31) at a radial position that is closer to the axis of rotation (X) than said cover body (32).
32. A centrifugal separator (1) according to any one of items 27-31, wherein said interface level sensor (30) is arranged such that said cover body (32) is positioned at least partly in the outer wall (19) of the centrifuge bowl (10).
33. A centrifugal separator (1) according to item 32, wherein said transmission window (33) is facing the outside of the centrifuge bowl (10).
34. A centrifugal separator (1) according to any one of items 24-33, wherein said centrifugal separator (1) is arranged for continuous discharge of a separated sludge phase from a plurality of sludge outlets (17) distributed around the periphery of the centrifuge bowl (10), and wherein said interface level sensor (30) is arranged at the position of one of said sludge outlets; thereby replacing one of said sludge outlets (17).
35. A centrifugal separator (1) according to any one of items 24-33, wherein said centrifugal separator (1) is arranged for intermittent discharge of a separated sludge phase from a plurality of sludge outlets (17) distributed around the periphery of the centrifuge bowl (10), and wherein said solid transmission window (33) is arranged axially above said sludge outlets (17).
36. A centrifugal separator (1) according to any previous item, further comprising a receiver (51) configured for receiving said wireless transmission of information of said at least one interface from said transmission means (42).
37. A centrifugal separator (1) according to item 36, wherein said receiver (51) is arranged in said frame (2).
38. A centrifugal separator (1) for separating at least one liquid phase from a liquid feed mixture, comprising
   a frame (2), a drive member (5) and a rotatable part (8),
   wherein the drive member (5) is configured to rotate the rotatable part (8) in relation to the frame (2) around an axis of rotation (X), and
   wherein the rotatable part (8) comprises a centrifuge bowl (10) enclosing a separation space (13);
   wherein the separation space (13) comprises surface enlarging inserts (15) for increasing the separation performance of the centrifugal separator (1);
   and wherein the centrifugal separator (1) further comprises
   an interface level sensor (30) for detecting at least one interface between separated phases in the centrifuge bowl (10) during operation of the centrifugal separator (1); said interface level sensor (30) comprising at least one capacitive sensor element (40a); and
   transmission means (42) configured for wireless transmission of information of said at least one interface to a receiver (51) outside of the centrifuge bowl (10).
39. A centrifugal separator (1) for separating at least one liquid phase from a liquid feed mixture, comprising
   a frame (2), a drive member (5) and a rotatable part (8),
   wherein the drive member (5) is configured to rotate the rotatable part (8) in relation to the frame (2) around an axis of rotation (X), and
   wherein the rotatable part (8) comprises a centrifuge bowl (10) enclosing a separation space (13);
   wherein the separation space (13) comprises surface enlarging inserts (15) for increasing the separation performance of the centrifugal separator (1);
   and wherein the centrifugal separator (1) further comprises
   an interface level sensor (30) for detecting at least one interface between separated phases in the centrifuge bowl (10) during operation of the centrifugal separator (1);
   wherein the interface level sensor (30) is formed as a single and replaceable unit in the centrifugal separator (1) and comprises at least one sensor element (40a), a microcontroller unit (MCU (41)) for interfacing with the at least one sensor element (40a), a power supply unit (44) and transmission means (42) configured for wireless transmission of information of said at least one interface to a receiver (51) outside of the centrifuge bowl (10).
40. A centrifugal separator (1) for separating at least one liquid phase from a liquid feed mixture, comprising
   a frame (2), a drive member (5) and a rotatable part (8),
   wherein the drive member (5) is configured to rotate the rotatable part (8) in relation to the frame (2) around an axis of rotation (X), and
   wherein the rotatable part (8) comprises a centrifuge bowl (10) enclosing a separation space (13);
   wherein the separation space (13) comprises surface enlarging inserts (15) for increasing the separation performance of the centrifugal separator (1);
   and wherein the centrifugal separator (1) further comprises
   an interface level sensor (30) for detecting at least one interface between separated phases in the centrifuge bowl (10) during operation of the centrifugal separator (1); and
   transmission means (42) configured for wireless transmission of information of said at least one interface to a receiver (51) outside of the centrifuge bowl (10);
   wherein the interface level sensor (30) further comprises a power supply unit (44) for providing electric current to the interface level sensor (30) in the form of at least one button cell battery (44); and
   wherein said at least one button cell battery (44) has a bottom body (44a) forming the positive terminal and a top cap (44b) forming the negative terminal, and wherein the at least one button cell battery (44) is arranged such that the top cap (44b) is at a radial position that is closer to the rotational axis (X) than the radial position of the bottom body (44a).
41. A centrifugal separator (1) according to item 40, wherein interface level sensor (30) is arranged in the centrifugal separator (1) such that the normal to the surface of the bottom body (44a) is substantially in the radial direction.
42. An interface level sensor (30) for detecting at least one interface between separated phases in a centrifuge bowl (10) of a centrifugal separator (1); said interface level sensor (30) comprising
   at least one sensor element (40a) for detecting said at least one interface;
   a power supply unit (44) for providing electric current to the interface level sensor (30);
   a microcontroller unit (MCU) (41) for interfacing with the at least one senor element;
   transmission means (42) configured for wireless transmission of information of said at least one interface to a receiver (51);
   wherein said interface level sensor (30) is formed as a single, replaceable unit.
43. An interface level sensor (30) according to item 42, wherein said sensor (30) comprises an elongated sensing body (31) in which said at least one sensor element (40a) is arranged.
44. An interface level sensor (30) according to item 43, wherein said sensing body (31) has an outer surface comprising a ceramic.
45. An interface level sensor (30) according to item 44, wherein said ceramic comprises aluminium oxide.
46. An interface level sensor (30) according to any one of items 42-45, wherein said power supply unit (44) comprises at least one button cell battery (44).
47. An interface level sensor (30) according to item 43 and 46, wherein said at least one button cell battery (44) has a bottom body (44a) forming the positive terminal and a top cap (44b) forming the negative terminal, and wherein the at least one button cell battery (44) is arranged such that the bottom body (44a) is arranged at a position that is closer to said sensing body (31).
48. An interface level sensor (30) according to item 47, wherein said sensing body (31) is elongated in a sensing direction (S) and wherein the normal to the surface of the bottom body (44a) of the at least one button cell battery (44) is substantially in the same direction as the sensing direction (S).
49. An interface level sensor (30) according to any one of items 42-48, wherein the MCU (41) is arranged on a printed circuit board (PCB) (31b).
50. An interface level sensor (30) according to item 49, wherein the PCB (31b) is a rigid-flex PCB.
51. An interface level sensor (30) according to item 49 or 50, wherein also the at least one sensing elements are arranged on the same PCB as the MCU (41).
52. An interface level sensor (30) according to any one of items 42-51, wherein the interface level sensor (30) comprises an elongated sensing body (31) in which said at least one sensor element (40a) is arranged and a cover body (32) covering said MCU (41), power supply unit (44) and transmission means (42), and wherein said sensing body (31) extends from said cover body (32).
53. An interface level sensor (30) according to item 52, further comprising a transmission window (33) arranged in said cover body (32).
54. An interface level sensor (30) according to item 52 or 53, wherein said cover body (32) comprises stainless steel.
55. An interface level sensor (30) according to any one of items 42-54, wherein the transmission means (42) comprises an antenna configured for radiofrequency (RF) signalling.
56. A system (50) for detecting at least one interface between separated phases in a centrifuge bowl (10) of a centrifugal separator (1); said system comprising
   - an interface level sensor (30) according to any one of items 42-55;
   - a receiver (51) configured for receiving said wireless transmission of information of said at least one interface from said transmission means (42); and
   - a control unit (52) configured for sending operational request to a centrifugal separator (1) based on the information of said at least one interface that is received by said receiver (51).
57. A separation system (70) for separating at least one liquid phase from a liquid feed mixture, said system comprising
   - a centrifugal separator (1) according to any one of items 1-41,
   - a receiver (51) configured for receiving said wireless transmission of information of said at least one interface from the transmission means (42) of the interface level sensor (30) of said centrifugal separator (1); and
   - a control unit (52) configured for sending operational request to said centrifugal separator (1) based on the information of said at least one interface that is received by said receiver (51).
58. A separation system (70) according to item 56, wherein said operational requests comprises requests for adjusting the radial level of at least one interface between separated phases in the centrifuge bowl (10) during operation of the centrifugal separator (1).
59. A separation system according to item 58, wherein said operational requests comprises changing the counter pressure downstream of at least one liquid outlet (16, 82) for a separated liquid phase in the centrifugal separator (1).

## Claims

1. A centrifugal separator (1) for separating at least one liquid phase from a liquid feed mixture, comprising
a frame (2), a drive member (5) and a rotatable part (8),
wherein the drive member (5) is configured to rotate the rotatable part (8) in relation to the frame (2) around an axis of rotation (X), and
wherein the rotatable part (8) comprises a centrifuge bowl (10) enclosing a separation space (13);
wherein the separation space (13) comprises surface enlarging inserts (15) for increasing the separation performance of the centrifugal separator (1);
and wherein the centrifugal separator (1) further comprises
an interface level sensor (30) for detecting at least one interface between separated phases in the centrifuge bowl (10) during operation of the centrifugal separator (1); and
transmission means (42) configured for wireless transmission of information of said at least one interface to a receiver (51) outside of the centrifuge bowl (10);
and wherein the centrifugal separator (1) comprises a solid transmission window (33) arranged in the wall of the centrifuge bowl (10); said solid transmission window (33) having a higher transmission capacity for the wireless communication signal than the material of the centrifuge bowl (10).

2. A centrifugal separator (1) according to claim 1, wherein the interface level sensor (30) comprises at least one sensor element (40a) for direct detection of the position of said at least one interface and wherein said transmission means (42) is configured for wireless transmission of information of said position of said at least one interface.

3. A centrifugal separator (1) according to claim 2, wherein the at least one sensor element (40a) comprises a capacitive sensor element.

4. A centrifugal separator (1) according to any one of claims 2-3, wherein the centrifuge bowl (10) comprises a sludge space (14) radially outside said separation space (13); and wherein the interface level sensor (30) is arranged with the at least one sensor element (40a) in said sludge space (14).

5. A centrifugal separator (1) according to any one of claims 2-4, wherein the interface level sensor (30) comprises at least two sensor elements (40a) arranged along a sensing direction (S), and wherein said sensing direction (S) forms an angle with the axis of rotation (X).

6. A centrifugal separator (1) according to any one of claims 2-5, wherein the centrifugal separator (1) comprises a power supply unit (44) for providing electric current to the interface level sensor (30).

7. A centrifugal separator (1) according to claim 6, wherein said power supply unit (44) comprises a coil mounted in said rotatable part (8) so that a voltage may be induced in said coil by an external magnetic field during rotation of the rotatable part (8).

8. A centrifugal separator (1) according to claim 14, wherein said power supply unit (44) is arranged in the interface level sensor (30).

9. A centrifugal separator (1) according to claim 6 or 8, wherein said power supply unit (44) comprises at least one button cell battery (44).

10. A centrifugal separator (1) according to claim 9, wherein said at least one button cell battery (44) has a bottom body (44a) forming the positive terminal and a top cap (44b) forming the negative terminal, and wherein the at least one button cell battery (44) is arranged such that the top cap (44b) is at a radial position that is closer to the rotational axis (X) than the radial position of the bottom body (44a).

11. A centrifugal separator (1) according to claim 10, wherein the interface level sensor (30) is arranged in the centrifugal separator (1) such that the normal to the surface of the bottom body (44a) is substantially in the radial direction.

12. A centrifugal separator (1) according to any previous claim, wherein the transmission window (33) comprises a ceramic material.

13. A centrifugal separator (1) according to claim 12, wherein the ceramic material comprises aluminium oxide.

14. A centrifugal separator (1) according to any previous claim, wherein the interface level sensor (30) is implemented as a single and replaceable unit in the centrifugal separator (1) and comprises at least one sensor element (40a), a microcontroller unit (MCU) (41) for interfacing with the at least one sensor element (40a), a power supply unit (44) and said transmission means (42).

15. A centrifugal separator (1) according to claim 14 wherein said centrifugal separator (1) is arranged for continuous discharge of a separated sludge phase from a plurality of sludge outlets (17) distributed around the periphery of the centrifuge bowl (10), and wherein said interface level sensor (30) is arranged at the position of one of said sludge outlets; thereby replacing one of said sludge outlets (17).

16. An interface level sensor (30) for detecting at least one interface between separated phases in a centrifuge bowl (10) of a centrifugal separator (1); said interface level sensor (30) comprising
at least one sensor element (40a) for detecting said at least one interface;
a power supply unit (44) for providing electric current to the interface level sensor (30);
a microcontroller unit (MCU) (41) for interfacing with the at least one senor element;
transmission means (42) configured for wireless transmission of information of said at least one interface to a receiver (51);
wherein said interface level sensor (30) is formed as a single, replaceable unit.
